# EUROPEAN PATENT APPLICATION

(11) **EP 3 025 595 A1**
(43) Date of publication of application: **01.06.2016**
(21) Application number: 14195347.1
(22) Date of filing: 28.11.2014
(51) Int. Cl.: A24C 5/35

(54) **A TRANSPORT CHANNEL USED IN THE TOBACCO-PROCESSING INDUSTRY**

(71) Applicant: International Tobacco Machinery Poland Sp. z o.o., 26-600 Radom (PL)
(72) Inventor: Owczarek, Rados aw, 26-600 Radom (PL); Sikora, Leszek, 26-600 Radom (PL); Ugrewicz, Grzegorz, 26-600 Radom (PL)
(74) Representative: Markieta, Jaroslaw Franciszek

(57) **Abstract**

The object of the invention is a channel for the gravitational transport of rod-like articles in the tobacco industry, ordered in layers and diagonally to their direction of transport, among different levels from the inlet area of the channel to the outlet area, characterized in that the channel (1) between the inlet area (3) and the outlet area (4) is a principally vertical channel with a non-linear course so that at least one wall of the channel has sections holding the mass flow of rod-like articles, whereas the holding sections are inclined at such angle (alpha) to the horizontal level that the elements of the mass flow of rod-like articles move downwards and do not deposit in the transport channel.

## Description

The object of the invention is a transport channel for the downward gravitational transport of rod-like articles in the tobacco industry.

In the production lines of rod-like articles of the tobacco industry such as cigarettes, filters or cigarettes with the filter already attached, in the course of the production process the said articles cover a considerable distance after leaving the manufacturing machine before being placed into packages in the packaging machine or into the storages. They are usually conveyed in a multi-layered ordered stack, which eliminates the deformation, damage or destruction of the articles. There is a need of handling the stream of articles in order to deliver it to or from different devices used in the production line, among others in the downward direction. For this purpose, on the path of a horizontal conveyor transferring the articles, generally perpendicular channels connecting one horizontal conveyor with another horizontal conveyor or receiver are created. Rod-like articles completely fill the vertical channels and the principally horizontal conveyors, a condition determining the preservation of their arrangement. The transfer on the horizontal path is usually forced by the conveyor, like the transfer in angularly upward situated channels, whereas the downward transfer is usually forced by gravity, with the necessary condition being that the rod-like articles are damaged as little as possible during the transport. When the vertical channel is filled with rod-like articles the articles in its bottom part are subject to deformations caused by the pressure force caused by the mass of articles situated above.

Channels for transferring a stream of material in the downward direction are known in the prior art. The publication GB1393252 presents a transport channel comprising belts parallel to one another, adapted to transporting a single stream of rod-like articles arranged transversely to the upward direction of transport, whereas a part of the belts has the shape of a sinusoid allowing them to better hold the articles.

The publication GB2123373 presented a device for the transport of rod-like articles between two levels arranged transversely to their direction of transport, having at least two vertical transport channels situated at different levels and horizontally displaced relative to each other. Vertical channels are connected to each other through horizontal channels whose inlets are situated underneath the outlets of vertical channels situated above. In such a device, the horizontal channels have to be provided with conveyors which convey a layer of articles from the inlet of a channel towards the outlet of a channel.

The substance of the invention is a channel for the gravitational transport of rod-like articles in the tobacco industry, ordered in layers and transversely to their direction of transport, among different levels from the inlet area of a channel to the outlet area. A channel according to the invention is characterized in that the channel between the inlet area and the outlet area is a principally vertical channel with a non-linear course so that at least one wall of the channel has sections holding the mass flow of rod-like articles. The holding sections are inclined at such angle (alpha) to the horizontal level that the elements on the mass flow of rod-like articles move downwards and do not deposit in the transport channel.

Furthermore, a channel according to the invention is characterized in that the channel has a sinusoid shape and the holding sections have a cross-sectional shape of an arc, whereas the angle (alpha) is contained between the ray drawn between the crest of the sinusoid section and the trough of the sinusoid section and the horizontal level.

Furthermore, a channel according to the invention is characterized in that the channel has a polyline shape, and the holding sections have the shape of straight sections.

Furthermore, a channel according to the invention is characterized in that the angle (alpha) contained between the ray and the horizontal level is contained in the range of 0-90°.

Furthermore, a channel according to the invention is characterized in that the angle (alpha) contained between the ray and the horizontal level is contained in the range of 30-60°.

Furthermore, a channel according to the invention is characterized in that the angle (alpha) contained between the straight holding section and the horizontal level is contained in the range of 0-90°.

Furthermore, a channel according to the invention is characterized in that the angle (alpha) contained between the straight holding section and the horizontal level is contained in the range of 30-60°.

Due to the use of a transport channel in the mass flow of rod-like articles in the tobacco industry, we can more efficiently transport the articles downwards, among the levels of the mass flow, without the damage to rod-like articles situated in the bottom part of the channel. The angular arrangement of the channel walls relative to the vertical axis of the channel causes a reduction of local stresses affecting rod-like articles situated in the bottom part of the channel caused by the specific mass of rod-like articles situated above the elements affected by the stresses which occur if traditional, vertical channels are used. It is also not required to use more expensive channels with conveyors on side walls holding the article stream in a forced way. In order to eliminate stresses acting on the elements situated in the bottom part of the channel, (non-linear) channel sections situated at an angle to the vertical channel axis were used. The force of pressure on the articles situated in the sections at an angle to the channel axis considerably decreased due to the reduction of the height of the column of rod-like articles and due to the fact that most stresses have been taken over by the channel walls.

The object of the invention was presented in detail in a preferred embodiment in a drawing in which:
- Fig. 1: shows a transport channel in a first embodiment in a downward flow position with a zigzag shape
- Fig. 2: shows the transport channel in a second embodiment in a downward flow position with a sinusoid shape
- Fig. 3: shows the transport channel with visualised distribution of forces in the mass flow pressing against the channel walls.

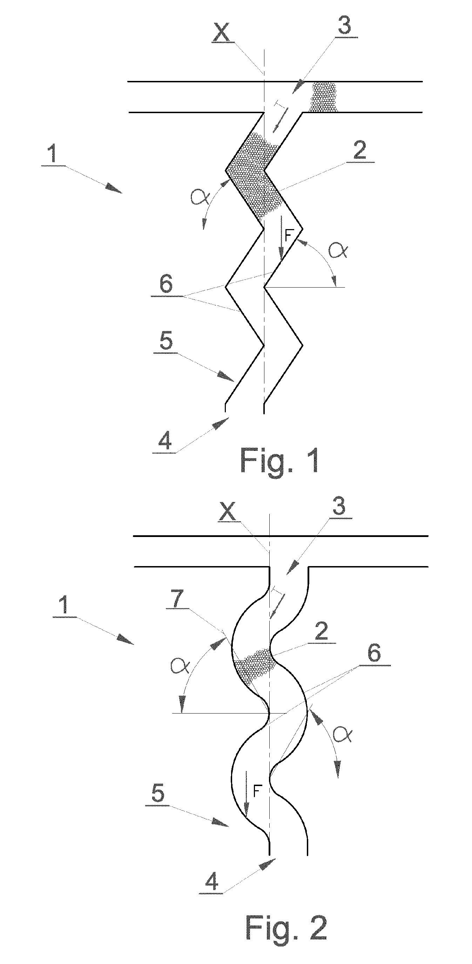

Fig. 1 shows a transport channel 1 of a production line of the tobacco industry for conveying rod-like articles 2. Rod-like articles of the tobacco industry may be for example filter rods or cigarettes. Rod-like articles are arranged in layers forming the so-called mass flow. The mass flow is characterized in that a considerable number of rod-like articles move in multiple layers, two or more layers, in the direction forced by the conveyor movement, in a continuous manner, so that apart from the phases of start or stop of the flow its front face or end face cannot be distinguished.

The mass flow of rod-like articles is usually conveyed horizontally, however, it is necessary to convey the transport stream so that the flow is to be directed downwards. Usually, the force of gravity is used to direct the mass flow downwards. In the embodiment of the invention shown in Fig. 1 the mass flow of rod-like articles is directed from the horizontal channel 3 downwards to the vertical transport channel 2 in the direction T. In the horizontal channel 3, the movement of the mass of rod-like articles is forced by a conveyor (not shown), whereas in the channel 2 the movement of rod-like articles is forced by the action of the force of gravity. Rod-like articles are transported downwards from the inlet area 3 of the channel 1 to the outlet area 4 of the channel 1. The channel in the section from the inlet area 3 to the outlet area 4 has a polyline shape whose side walls 6, forming straight sections, are situated slantwise to the axis X of the transport channel 1. In this embodiment the side walls 6 form an angle (alpha) between the ray coming from the vertex of a polyline shaped channel wall and passing through another vertex of another polyline shaped channel wall. The angle (alpha) takes the values in the range between 0 and 90 degrees, preferably between 30 and 60 degrees. The side walls 6 of the channel 1 form straight sections and at least one of them is a section holding the mass flow of rod-like articles.

Breaking of the vertical transport channel reduces the force of pressure on articles situated in the bottom part 5 of the transport channel 1 by distributing the pressure force F caused by the mass of rod-like articles situated above the articles in the bottom part of the channel 1. The pressure force F is distributed on the slanted side walls 6 of the transport channel 1. The placement of the side wall 6 at an angle (alpha) ensures the gravitational movement of rod-like articles downwards, either by sliding down or by rolling. The angle (alpha) was selected in such a way as to minimize and ultimately exclude the deposition of rod-like articles on the side walls as in the solutions known in the prior art.

Fig. 2 shows the transport channel 1 in the second embodiment of the transport of rod-like articles 2 in a tobacco industry production line. Like in the first embodiment of the invention, also in the second embodiment the mass flow of rod-like articles is conveyed from the horizontal channel 3 downwards to the vertical transport channel 2 in the direction T. In the horizontal channel 3, the movement of the mass of rod-like articles is forced by a conveyor (not shown), whereas in the channel 2 the movement of rod-like articles is forced by the action of the force of gravity. Rod-like articles are transported downwards from the inlet area 3 of the channel 1 to the outlet area 4 of the channel 1. The channel in the section from the inlet area 3 to the outlet area 4 has a sinusoid shape whose side walls 6 form arched sections situated slantwise to the axis X of the transport channel 1. In this embodiment the side walls 6 form an angle (alpha) between the ray coming from the crest of the sinusoid of the channel wall 6 and pass through another crest of another arc of this channel wall. The angle (alpha) takes the values in the range between 0 and 90 degrees, preferably between 30 and 60 degrees.

The side walls 6 are situated at an angle to the axis X of the channel 1, which during the transport reduces the pressure force F caused by the mass of rod-like articles situated above the articles in the bottom part of the channel 1. The pressure force F is distributed on the arched side walls 6 of the transport channel 1.

Also in the second embodiment, the placement of the side wall 6 at an angle (alpha) ensures the gravitational movement of rod-like articles downwards, either by sliding down or by rolling. The angle (alpha) and the depth of the arc were selected in such a way as to minimize and ultimately exclude the deposition of rod-like articles on the side walls as in the solutions known in the prior art.

The side walls 6 of the channel 1 form arched sections, and at least one of them is a section holding the mass flow of rod-like articles.

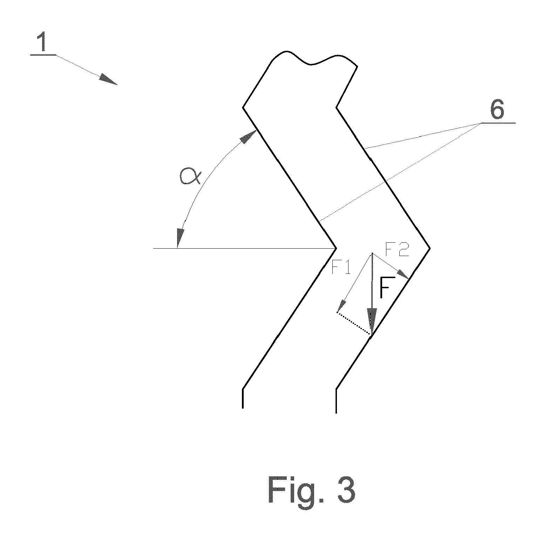

Fig. 3 shows the distribution of the force F in the transport channel 1. The force F is caused by the action of gravity causing the pressure of rod-like articles situated in the upper part of the transport channel on the rod-like articles situated in its bottom part. The force F is distributed into component forces F1 and F2. The component F1 is situated parallel to the channel wall, and the component F2 perpendicular to the wall 6 of the transport channel 1. The side walls 6 of the channel 1 are situated at an angle (alpha) to the horizontal level, allowing the gravitational movement of rod-like articles downwards, by sliding down or rolling.

## Claims

1. A channel for gravitational transport of rod-like articles in the tobacco industry, arranged in layers and transversely to their direction of transport, between different levels from the inlet area of the channel to the outlet area
**characterized in that**
the channel (1) between the inlet area (3) and the outlet area (4) is a principally vertical channel with a non-linear course so that
at least one wall of the channel has sections holding the mass flow of rod-like articles, whereas
the holding sections are inclined at such an angle (alpha) to the horizontal level that the elements of the mass flow of rod-like articles move downwards and do not deposit in the transport channel.

2. A channel as in claim 1 **characterized that** the channel has a sinusoid shape and the holding sections have the shape of an arc sector in their cross-section, whereas the angle (alpha) is contained between the ray (7) drawn between the crest of the sinusoid section and the trough of the sinusoid section and the horizontal level.

3. A channel as in claim 1 **characterized that** the channel has a polyline shape, whereas the holding sections have the shape of straight sections.

4. A channel as in claim 2 **characterized in that** the angle (alpha) contained between the ray (7) and the horizontal level is contained in the range of 0-90°.

5. A channel as in claim 2 **characterized in that** the angle (alpha) contained between the ray (7) and the horizontal level is contained in the range of 30-60°.

6. A channel as in claim 3 **characterized in that** the angle (alpha) contained between the straight holding section (6) and the horizontal level is contained in the range of 0-90°.

7. A channel as in claim 3 **characterized in that** the angle (alpha) contained between the straight holding section (6) and the horizontal level is contained in the range of 30-60°.
